# EUROPÄISCHE PATENTSCHRIFT

(11) **EP 0 852 635 B1**
(45) Veröffentlichungstag und Bekanntmachung des Hinweises auf die Patenterteilung: **08.03.2000**
(21) Anmeldenummer: 96931019.2
(22) Anmeldetag: 04.09.1996
(51) Int. Cl.: D07B 1/06, D07B 3/00, D07B 5/12

(54) **DRAHTFILAMENT, INSBESONDERE ZUR VERSTÄRKUNG VON GUMMI- ODER KUNSTSTOFFARTIKELN, VERFAHREN ZU DESSEN HERSTELLUNG UND VORRICHTUNG ZUM DURCHFÜHREN DES VERFAHRENS**
WIRE FILAMENT, ESPECIALLY FOR REINFORCING RUBBER OF PLASTIC ITEMS, PROCESS FOR ITS PRODUCTION AND DEVICE FOR IMPLEMENTING THE PROCESS
FILAMENT METALLIQUE S'UTILISANT NOTAMMENT POUR RENFORCER DES ARTICLES EN CAOUTCHOUC OU EN PLASTIQUE, PROCEDE PERMETTANT DE LE PRODUIRE ET DISPOSITIF DE MISE EN UVRE DUDIT PROCEDE

(30) Priorität: 25.09.1995 DE 19535595
(43) Veröffentlichungstag der Anmeldung: 15.07.1998
(73) Patentinhaber: DRAHTCORD SAAR GMBH & Co.KG, 66663 Merzig (DE)
(72) Erfinder: DOUJAK, Siegfried, D-66663 Merzig (DE)
(74) Vertreter: Preissner, Nicolaus, Dipl.-Ing.
(86) Internationale Anmeldenummer: EP9603885
(87) Internationale Veröffentlichungsnummer: WO9712092

(56) Entgegenhaltungen:
- EP-A- 0 143 767
- EP-A- 0 627 521
- EP-A- 0 635 597
- DE-B- 1 159 818
- JP-A- 2 269 885

## Beschreibung

Die Erfindung betrifft ein Verfahren zur Herstellung eines spiralförmigen Drahtfilaments, insbesondere zur Verstärkung von Gummi- oder Kunststoffartikeln, bei dem mindestens zwei einzelne Drahtfilamente miteinander verdrillt und plastisch verformt werden und danach voneinander getrennt werden, eine Vorrichtung zur Durchführung des Verfahrens und ein nach dem Verfahren hergestelltes Drahtfilament

Drahtfilamente der vorstehend benannten Art sind bekannt. Diese werden insbesondere zur Herstellung von Stahlcorden verwendet, die als Einlagen in Luftreifen für Kraftfahrzeuge zur Verbesserung deren Fahreigenschaften, Dynamik, Stabilität sowie zur Verlängerung deren Lebensdauer verwendet werden.

Vor dem Zusammenfassen und Weiterverarbeiten von Darhtfilamenten zu Stahlcorden werden diese vorbehandelt und vorgeformt, da sie als gezogene Filamente ohne entsprechende Vorformung eine zu geringe Ermüdungsfestigkeit haben und außerdem dazu neigen, in gerader Form aus dem Reifen zu wandern. Bei Vorbehandlungen ist darauf zu achten, daß die Drahtfilamente nicht unter der Behandlung leiden. Insbesondere bei einer Verformung über Zahnräder und dergleichen erhalten die hochfesten Drahtfilamente lokale Druckstellen, wodurch sie für zyklische Belastungen ungeeignet werden, da derartige lokale Verformungen Ausgangspunkte für das Auftreten von Ermüdungsbrüchen sind.

Die DE-A-44 09 182 offenbart ein Verfahren zur Herstellung eines spiralförmigen Drahtfilamentes, insbesondere zur Verstärkung von Gummi- oder Kunststoffartikeln, bei dem mindestens zwei einzelne Drahtfilamente miteinander verdrillt und plastisch verformt werden und danach voneinander getrennt werden. Zunächst werden die Drahtfilamente in sich verdrillt und zu einem Cord geformt, der anschließend durch Verdrillen in umgekehrter Richtung wieder aufgedreht wird. Zum Aufdrehen des Cords muß dieser elastischen Verdrehspannungen ausgesetzt werden, die als sogenannte Resttorsionsspannung in den Drahtfilamenten verbleiben.

Aus der JP-A-02 269 885 ist ein Verfahren zur Herstellung von Drahtfilamenten für Stahlcorde bekannt, bei dem zwei Drahtfilamente von Spulen abgezogen, durch ein Element zusammengefaßt und in einem Falschdraller verdrillt werden. Am Ausgang des Falschdrallers werden die einzelnen Filamente im Bereich einer Rolle wieder auseinandergewickelt und als verdrehte Filamente auf Spulen aufgewickelt. Auch diese Drahtfilamente weisen Resttorsionsspannungen auf, da keinerlei Maßnahmen zu deren Abbau vorgesehen sind.

Die EP-A-0 143 767 und EP-A-0 635 597 beschreiben Verfahren zur Herstellung von Stahlcorden, die aus mehreren Drahtfilamenten bestehen.

Aus der DE-AS 1 159 818 ist eine Verfahren zur Herstellung elastischer Drahtseile bekannt, wonach zur Herstellung von elastischen, spannungsarmen und herstellungsdrallfreien Drahtseilen die zum Aufbau des Drahtseiles verwendeten Drähte in den bleibend-verformenden Bereich hinein verdreht werden und anschließend um den doppelten Betrag der bis zur Rückgabegrenze erteilten Windungen zurückgedreht. Bei der Rückgabegrenze handelt es sich dabei um eine konstante Höchstzahl an Verdrehungen, die ein gegebener Draht nach dem Verdrehen wieder zurückgeben kann. Über diese Rückgabegrenze hinausgehende Verdrehungen werden nicht zurückgegeben, sondern als Dauerverformung beibehalten.

Aus der DE 39 14 330 C2 ist ein Verfahren zur Herstellung eines Drahtbündels oder eines Seils bekannt, bei dem zur Verlitzung von Drähten diese umeinander gelegt und/oder umeinander verdreht und die derart erhaltenen Litzen mittels einer Überdreheinrichtung in ihrer Verdrehrichtung noch weiter zusammengedreht werden. Durch das weitere Verdrehen der Litze wird diese über den elastischen Verformbereich hinaus in den plastischen Formbereich hinein verdreht. Um die mit unterschiedlichen Resttorsionen derart hergestellter Litzen verbundenen Probleme zu verringern, wird der Litze hinter der Überdreheinrichtung eine niedrige konstante Zugspannung gegeben.

Der Erfindung liegt demnach die Aufgabe zugrunde, ein Verfahren zur Herstellung eines spiralförmigen Drahtfilaments vorzuschlagen, mit dem die Drahtfilamente ohne elastische Resttorsionsspannungen herstellbar sind.

Des weiteren besteht die Aufgabe der Erfindung darin, eine einfach und variabel gestaltete und in die Herstellungslinie eines Stahlcords integrierbare Vorrichtung zur Durchführung eines derartigen Verfahrens bereitzustellen.

Zur Lösung der der Erfindung zugrundeliegenden Aufgabe wird ein erstes Verfahren der eingangs genannten Art zur Herstellung von Drahtfilamenten mit folgenden Schritten vorgeschlagen:
- A1:: mindestens zwei einzelne Drahtfilamente werden von Spulen abgezogen,
- B1:: die Drahtfilamente werden jeweils in einem Falschdraller verdrillt und plastisch verformt,
- C1:: die Drahtfilamente werden parallel zusammengefaßt und
- D1:: in einem weiteren Falschdraller in zu der Drehrichtung der ersten Falschdraller gegenläufiger Drehrichtung umeinander verdreht.

Ein zweites, zur Lösung der der Erfindung zugrundeliegenden Aufgabe dienendes Verfahren der eingangs genannten Art umfaßt die folgenden Schritte:
- A2:: mindestens zwei einzelne Drahtfilamente werden von Spulen abgezogen,
- B2:: die Drahtfilamente werden parallel zusammengefaßt und
- C2:: in einem Falschdraller umeinander verdreht und plastisch verformt,
- D2:: die Drahtfilamente werden in einem weiteren Falschdraller in zu der Drehrichtung des ersten Falschdrallers gegenläufiger Drehrichtung umeinander verdreht.

Erfindungsgemäß wird somit die plastische Verformung der Drahtfilamente zu spiralförmigen Filamenten durch eine Behandlung mit Falschdrallern erreicht, wobei die Drahtfilamente in wenigstens dem letzten Falschdraller gemeinsam und umeinander verdreht werden. Durch diese erfindungsgemäße Behandlung erhalten die Drahtfilamente die gewünschte Spiralform, ohne daß sie beschädigt und/oder örtlich verformt werden, wie es beispielsweise bei einer Vorformung mittels Zahnrädern der Fall sein kann. Somit werden durch die erfindungsgemäße Art der Herstellung die Ermüdungseigenschaften der Drahtfilamente nicht beeinträchtigt. Durch aufeinander abgestimmtes Verdrehen und Verdrillen der Drahtfilamente in einem oder mehreren ersten Falschdrallern sowie einem weiteren Falschdraller werden die elastischen Resttorisonspannungen abgebaut.

Erfindungsgemäß wird zur weiteren Lösung der Aufagbe eine Vorrichtung zur Durchführung eines erfindungsgemäßen Verfahrens zur Herstellung von Drahtfilamenten vorgeschlagen, die mindestens einen ersten Falschdraller zum Verdrillen und plastischen Verformen von von Spulen abgezogenen Drahtfilamenten, eine Vorrichtung zum Zusammenführen einzelner Drahtfilamente vor oder nach dem mindestens einen Falschdraller und einen weiteren Falschdraller zum Zurückdrehen der zuvor verdrillten und plastisch verformten Drahtfilamente aufweist.

Eine erfindungsgemäße Vorrichtung zur Durchführung eines erfindungsgemäßen Verfahrens zur Herstellung von Drahtfilamenten läßt sich in besonders einfacher und kostengünstiger Weise aus bekannten Einzelelementen zusammensetzen. Die erfindungsgemäße Vorrichtung ist insbesondere dazu geeignet, in eine eventuell bereits vorhandene Herstellungslinie für Stahlcorde integriert zu werden. Die mittels der erfindungsgemäßen Vorrichtung unter Anwendung des erfindungsgemäßen Verfahrens hergestellten Drahtfilamente können somit direkt nach dem Durchlaufen des erfindungsgemäßen Verfahrens beispielsweise zu Stahlcorden weiterverarbeitet werden. Andererseits können sie jedoch auch zur Lagerung und/oder zum Transport auf Spulen aufgewickelt werden.

Die Erfindung wird anhand zweier in der Zeichnung dargestellter Ausführungsbeispiele dargestellt und im folgenden näher erläutert.
- Figur 1: zeigt in schematischer Darstellung ein erstes Ausführungsbeispiel einer erfindungemäßen Vorrichtung zur Durchführung eines ersten erfindungsgemäßen Verfahrens zur Herstellung von Drahtfilamenten.
- Figur 2: zeigt in schematischer Darstellung ein zweites Ausführungsbeispiel einer erfindungsgemäßen Vorrichtung zur Durchführung eines zweiten erfindungsgemäßen Verfahrens zur Herstellung von Drahtfilamenten.

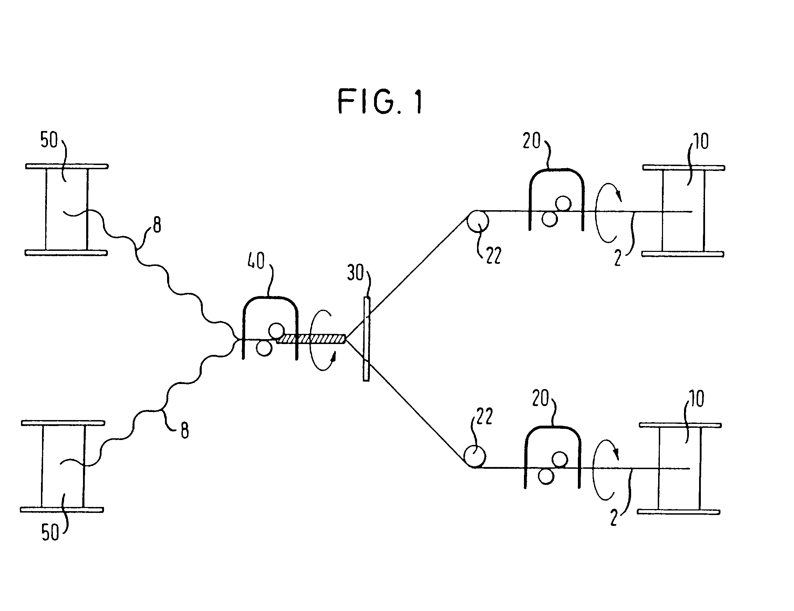

Figur 1 zeigt in schematischer Darstellung ein erstes Ausführungsbeispiel einer erfindungsgemäßen Vorrichtung zur Herstellung von Drahtfilamenten. Die in Figur 1 dargestellte Vorrichtung umfaßt zwei Spulen 10, auf welchen einzelne Drahtfilamente 2 aufgewickelt sind. Des weiteren umfaßt die erfindungsgemäße Vorrichtung zwei jeweils den Spulen 10 nachgeordnete Falschdraller 20, den Falschdrallern 20 nachgeordnete Umlenkelemente 22, eine als Vorrichtung zum Zusammenführen von Drahtfilamenten dienende Lochscheibe 30, einen nach der Lochscheibe 30 angeordneten weiteren Falschdraller 40 sowie zwei Aufwickelspulen 50.

Zur Herstellung von Drahtfilamenten gemäß einem ersten erfindungsgemäßen Verfahren, welches mittels der in Figur 1 dargestellten Vorrichtung durchführbar ist, werden zwei einzelne Drahtfilamente 2 von den beiden Spulen 10 abgezogen. Dies erfolgt in üblicher und bekannter Weise mittels eines nicht näher dargestellten Ausziehwerks. Die beiden Drahtfilamente 2 durchlaufen jeweils einen Falschdraller 20, in welchem sie um sich selbst verdrillt werden, und zwar bis in den Bereich plastischer Verformung hinein. Im Falle des dargestellten Beispiels erfolgt die Verdrillung der Drahtfilamente 2 im Uhrzeigersinn, also rechtsgängig.

Nach dem Verlassen des Falschdrallers 20 werden die plastisch verformten Drahtfilamente 2 über Umlenkelemente 22 (beispielsweise Umlenkrollen) einer Lochscheibe 30 zugeführt, mittels welcher die beiden Drahtfilamente zusammengeführt und -gefaßt werden. Die zusammengefaßten Drahtfilamente werden dem weiteren Falschdraller 40 zugeführt, in welchem sie in zu der Drehrichtung der ersten Falschdraller 20 gegenläufiger Drehrichtung umeinander verdreht und somit zurückgedreht werden. Im Falle des in der Figur 1 dargestellten Beispiels dreht der Falschdraller 40 entgegengesetzt dem Uhrzeigersinn, also linksgängig. Am Ausgang des weiteren Falschdrallers 40 liegen die ursprünglich geraden Drahtfilamente 2 nun als spiralförmige Drahtfilamente 8 vor, die aufgrund der erfindungsgemäßen Abfolge aufeinander abgestimmten Verdrehens und Zurückdrehens keine elastischen Resttorsionsspannungen aufweisen.

Die nach dem erfindungsgemäßen Verfahren erhaltenen Drahtfilamente 8 können in einer entsprechenden Herstellungslinie beispielsweise für Stahlcorde zur Verstärkung von Luftreifen direkt weiterverarbeitet werden. Sie können jedoch auch, wie im Beispiel der Figur 1 dargestellt, zur Lagerung und/oder zum Transport auf Aufwickelspulen 50 aufgewickelt werden.

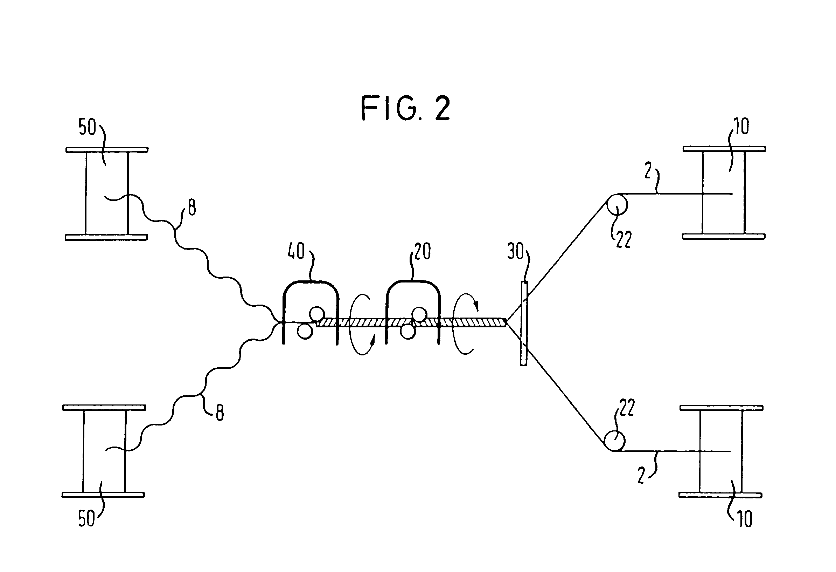

Figur 2 zeigt ein zweites Ausführungsbeispiel einer erfindungsgemäßen Vorrichtung zur Herstellung von Drahtfilamenten. Die schematisch dargestellte Vorrichtung umfaßt dieselben Elemente wie die in Figur 1 dargestellte Vorrichtung, also zwei Spulen 10 mit darauf aufgewickelten Drahtfilamenten 2, Umlenkelemente 22, eine Lochscheibe 30, einen ersten Falschdraller 20, einen weiteren Falschdraller 40 sowie zwei Aufwickelspulen 50.

Im Unterschied zu der in Figur 1 dargestellten erfindungsgemäßen Vorrichtung zur Herstellung von Drahtfilamenten ist in dem Ausführungsbeispiel der Figur 2 nur ein einzelner erster Falschdraller 20 vorgesehen, dem die Lochscheibe 30 vorgeordnet ist. Zur Herstellung von erfindungsgemäßen spiralförmigen Drahtfilamenten ohne elastische Resttorsionsspannungen werden nun erfindungsgemäß zwei Drahtfilamente 2 von den Spulen 10 abgezogen und mittels Umlenkelementen 22 der Lochscheibe 30 zugeführt, durch welche sie zusammengeführt und - gefaßt werden. Die derart zusammengefaßten Drahtfilamente 2 werden dem ersten Falschdraller 20 zugeführt, in welchem sie umeinander verdrillt und plastisch verformt werden. Im dargestellten Beispiel erfolgt die Verdrillung im Uhrzeigersinn, also rechtsgängig.

Dem ersten Falschdraller 20 direkt nachgeordnet ist der weitere Falschdraller 40, dem die umeinander verdrillten und plastisch verformten Drahtfilamente direkt zugeleitet werden. In dem weiteren Falschdraller 40 werden sie in zu der Drehrichtung des ersten Falschdrallers 20 gegenläufiger Drehrichtung umeinander verdreht und somit zurückgedreht. Im dargestellten Beispiel verdreht der weitere Falschdraller 40 in dem Uhrzeigersinn entgegengesetzter Richtung, also linksgängig. Nach dem Falschdraller 40 liegen, wie bei dem in Figur 1 dargestellten Beispiel, zwei erfindungsgemäße spiralförmige Drahtfilamente 8 vor, die keine elastischen Resttorsionsspannungen aufweisen. Diese werden, wie dargestellt, auf den beiden Aufwickelspulen 50 aufgewickelt.

Durch die erfindungsgemäße gemeinsame Verdrillung von Drahtfilamenten in wenigstens dem letzten Falschdraller des Herstellungsverfahrens wird auf besonders einfache und günstige Weise ein Abbau von Resttorsionsspannungen als auch eine bleibende Spiralverformung erreicht. Um beste Resultate zu erzielen, müssen insbesondere die über die Rückgabegrenze der Drahtfilamente hinausgehenden Verdrehungen durch das anschließende Aufdrehen ausgeglichen werden. Dies wird durch ein entsprechendes Abstimmen des oder der ersten Falschdraller 20 mit dem weiteren Falschdraller 40 erreicht.

Die Gangrichtung der eine Spirale bildenden Drahtfilamente wird durch die Verdrillrichtung des letzten Falschdrallers, also durch die Aufdrehrichtung, festgelegt. Demnach weisen die gemäß den in den Figuren dargestellten Verfahren hergestellten Drahtfilamente eine linksgängige Spiralform auf.

Die Form der Spirale der Drahtfilamente kann durch weitere Parameter, wie beispielsweise Ausziehgeschwindigkeit und die Drehzahl der Falschdraller bestimmt werden. Darüber hinaus wird die Spiralform auch durch die Anzahl der parallelen Drahtfilamente bei der Formung der Spirale beeinflußt, da natürlich auch mehr als zwei Drahtfilamente zusammengeführt und umeinander verdrillt werden können.

## Patentansprüche

1. Verfahren zur Herstellung eines spiralförmigen Drahtfilaments, insbesondere zur Verstärkung von Gummi- oder Kunststoffartikeln, bei dem mindestens zwei einzelne Drahtfilamente miteinander verdrillt und plastisch verformt werden und danach voneinander getrennt werden, gekennzeichnet durch folgende Verfahrensschritte:
A1: mindestens zwei einzelne Drahtfilamente (2) werden von Spulen (10) abgezogen,
B1: die Drahtfilamente (2) werden jeweils in einem Falschdraller (20) verdrillt und plastisch verformt,
C1: die verdrillten und plastisch verformten Drahtfilamente (2) werden parallel zusammengefaßt, und
D1: in einem Falschdraller (40) in zu der Drehrichtung der ersten Falschdraller (20) gegenläufigen Drehrichtung umeinander verdreht.

2. Verfahren zur Herstellung eines spiralförmigen Drahtfilaments, insbesondere zur Verstärkung von Gummi- oder Kunststoffpartikeln, bei dem mindestens zwei einzelne Drahtfilamente miteinander verdrillt und plastisch verformt und danach wieder getrennt werden, gekennzeichnet durch:
A2: mindestens zwei einzelne Drahtfilamente (2) werden von Spulen (10) abgezogen,
B2: die Drahtfilamente (2) werden parallel zusammengefaßt; und
C2: in einem Falschdraller (20) umeinander verdreht und plastisch verformt, und
D2: die umeinander verdrehten und plastisch verformten Drahtfilamente (2) werden in einem weiteren Falschdraller (40) in zu einer Drehrichtung des ersten Falschdrallers (20) gegenläufiger Drehrichtung umeinander verdreht.

3. Verfahren nach einem der Ansprüche 1 oder 2, dadurch gekennzeichnet, daß die Drahtfilamente (2) mittels einer Lochscheibe (30) zusammengeführt und -gefaßt werden.

4. Verfahren nach einem der Ansprüche 1 bis 3, dadurch gekennzeichnet, daß die spiralförmigen Drahtfilamente (8) direkt weiterverarbeitet werden.

5. Verfahren nach einem der Ansprüche 1 bis 4, dadurch gekennzeichnet, daß die spiralförmigen Drahtfilamente (8) auf Aufwikkelspulen (50) aufgewickelt werden.

6. Vorrichtung zur Durchführung eines Verfahrens nach einem der Ansprüche 1 bis 5, gekennzeichnet durch mindestens einen ersten Falschdraller (20) zum Verdrillen und plastischen Verformen von von Spulen (10) abgezogenen Drahtfilamenten (2), eine Vorrichtung (30) zum Zusammenführen einzelner Drahtfilamente vor oder nach dem mindestens einen Falschdraller (20) und einen weiteren Falschdraller (40) zum Zurückdrehen der zuvor verdrillten und plastisch verformten Drahtfilamente.

7. Vorrichtung nach Anspruch 6, dadurch gekennzeichnet, daß als Vorrichtung (30) zum Zusammenführen einzelner Drahtfilamente eine Lochscheibe (30) vorgesehen ist.

8. Drahtfilament, hergestellt nach einem Verfahren gemäß einem oder mehreren der Ansprüche 1 bis 5.

## Claims

1. A method of producing a spirally-shaped wire filament, more particularly for reinforcing rubber or plastics articles, in which at least two individual wire filaments are twisted together and plastically deformed and then separated from each other, comprising the following steps:
A1: uncoiling at least two individual wire filaments (2) from reels (10),
B1: twisting and plastically deforming each of said wire filaments (2) in a false twister (20),
C1: combining said twisted and plastically deformed wire filaments (2) in parallel, and
D1: intertwining said wire filaments (2) in a false twister (40) in a direction of twist opposite to that of said first false twister (40).

2. A method of producing a spirally-shaped wire filament, more particularly for reinforcing rubber or plastics articles, in which at least two individual wire filaments are twisted together and plastically deformed and then reseparated, comprising the following steps:
A2: uncoiling at least two individual wire filaments (2) from reels (10),
B2: combining said wire filaments (2) in parallel; and
C2: intertwining and plastically deforming said wire filaments (2) in a false twister (20), and
D2: intertwining said intertwined and plastically deformed wire filaments (2) in a further false twister (40) in a direction of twist opposite to the direction of twist of said first false twister (20).

3. The method as set forth in claim 1 or claim 2 wherein said wire filaments (2) are brought together and combined by means of a perforated disk (30).

4. The method as set forth in any of the claims 1 to 3 wherein said spiral-shaped wire filaments (8) are further processed directly.

5. The method as set forth in any of the claims 1 to 4 wherein said spiral-shaped wire filaments (8) are coiled on coiling reels (50).

6. A device for implementing a method as set forth in any of said claims 1 to 5 comprising at least one false twister (20) for twisting and plastically deforming wire filaments (2) uncoiled from reels (10), a device (30) for bringing together individual wire filaments (2) upstream or downstream of at least one false twister (20) and a further false twister (40) for return-twisting the wire filaments previously twisted and plastically deformed.

7. The device as set forth in claim 6 wherein as said device (30) for bringing together individual wire filaments (2) a perforated disk (30) is provided.

8. A wire filament produced by a method as set forth in one or more of the claims 1 to 5.

## Revendications

1. Procédé pour la réalisation d'un filament de fil en forme spiralée, en particulier pour le renforcement d'articles en caoutchouc ou en matière plastique, dans lequel au moins deux filaments de fil individuels sont torsadés l'un avec l'autre et déformés de manière plastique, puis ensuite séparés l'un de l'autre, caractérisé par les opérations suivantes :
A1 : au moins deux filaments de fil individuels (2) sont tirés depuis des bobines (10),
B1 : les filaments (2) sont respectivement torsadés dans un appareil à fausse torsion (20) et déformés de manière plastique,
C1 : les filaments (2) torsadés et déformés de manière plastique sont regroupés parallèlement, et
D1 : ils sont tournés l'un autour de l'autre dans un appareil à fausse torsion (40) dans une direction de rotation opposée à la direction de rotation du premier appareil à fausse torsion (20).

2. Procédé pour la réalisation d'un filament de fil en forme spiralée, en particulier pour le renforcement d'articles en caoutchouc ou en matière plastique, dans lequel au moins deux filaments de fil individuels sont torsadés l'un avec l'autre et déformés de manière plastique, puis ensuite séparés l'un de l'autre, caractérisé par les opérations suivantes :
A2 : au moins deux filaments de fil individuels (2) sont tirés depuis des bobines (10),
B2 : les filaments de fil (2) sont regroupés parallèlement, et
C2 : ils sont tournés l'un autour de l'autre (20) dans un appareil à fausse torsion (20) et déformés de manière plastique, et
D2 : les filaments (2) tournés l'un autour de l'autre et déformés de manière plastique sont tournés l'un autour de l'autre dans un autre appareil à fausse torsion (40) dans une direction de rotation opposée à la direction de rotation du premier appareil à fausse torsion (20).

3. Procédé selon l'une ou l'autre des revendications 1 et 2, caractérisé en ce que les filaments (2) sont rassemblés et regroupés au moyen d'une plaque à trous (30).

4. Procédé selon l'une des revendications 1 à 3, caractérisé en ce que les filaments (8) en forme spiralée sont directement travaillés.

5. Procédé selon l'une des revendications 1 à 4, caractérisé en ce que les filaments (8) en forme spiralée sont embobinés sur des bobines (50).

6. Appareil pour la mise en oeuvre d'un procédé selon l'une des revendications 1 à 5, caractérisé par au moins un premier appareil à fausse torsion (20) pour torsader et déformer de manière plastique des filaments (2) tirés depuis des bobines (10), un dispositif (30) pour rassembler des filaments individuels avant ou après ledit au moins un appareil à fausse torsion (20), et un autre appareil à fausse torsion (40) afin de tourner en sens opposé les filaments auparavant torsadés et déformés de manière plastique.

7. Appareil selon la revendication 6, caractérisé en ce que l'on prévoit une plaque à trous (30) à titre d'appareil (30) pour le regroupement des filaments individuels.

8. Filament produit selon un procédé selon l'une ou plusieurs des revendications 1 à 5.
